Europäisches Patentamt

(19) European Patent Office

Office européen des brevets

(11) Publication number: **0 200 969**
**B1**

(12) **EUROPEAN PATENT SPECIFICATION**

(45) Date of publication of patent specification: **07.06.89**

(51) Int. Cl.⁴: **B 65 B 1/32,** G 01 F 23/20

(21) Application number: **86105324.7**

(22) Date of filing: **17.04.86**

(54) **Bottle filling device.**

(30) Priority: **22.04.85 IT 1810785**

(43) Date of publication of application:
**12.11.86 Bulletin 86/46**

(45) Publication of the grant of the patent:
**07.06.89 Bulletin 89/23**

(84) Designated Contracting States:
**BE DE FR GB NL**

(56) References cited:
**DE-A-3 227 025**
**US-A-3 776 324**

(73) Proprietor: **CORNIANI S.r.l.**
**Strada Boschi**
**I-46040 Pozzolo (Mantova) (IT)**

(72) Inventor: **Corniani, Carlo**
**Via Ferrari, 33**
**I-46045 Marmirolo (IT)**

(74) Representative: **Modiano, Guido et al**
**MODIANO, JOSIF, PISANTY & STAUB Modiano**
**& Associati Via Meravigli, 16**
**I-20123 Milan (IT)**

Courier Press, Leamington Spa, England.

## Description

This invention relates to a bottle filling device.

It is a known fact that most of the current devices for filling large numbers of bottles being supplied in packaging boxes envisage as the first operation the extraction of the bottles from the boxes and their alignment on a transport member which conveys them to a filling machine of the carousel type. The bottles are then loaded at one of a plurality of stations of the machine and the weight of the liquid introduced is measured, in accordance with a by now common practice which is enforced by law in some countries. This practice eliminates the metering by volume through pistons which leads to inaccuracies due to variations in the specific weight of the liquid, foaming, and other causes which need not to be listed herein.

After filling and topping, the bottles are again aligned on a transport member which conveys them to machines which act to put them back into the boxes. It is immediately apparent that this procedure involves, due to the need of machines for the extraction of the bottles from the boxes and transport members to take the empty boxes to the machines for loading them with the filled bottles, disadvantageous features resulting from high installation costs, excessive bulk, and high maintenance requirements.

There also exist devices which effect the bottle filling without taking them out of the boxes, by holding said boxes aligned on a transport and halting them at the filling station. These devices provide however, for a limited productivity or pay for an increased production rate with fractioning into several lines with increased cost and bulk. But above all these devices are obsolete because they effect the filling by volumetric metering, with the shortcomings cited above.

The foregoing concerns, as mentioned, high potential plants; with plants intended for a limited output much used are in-line bottle filling devices wherein the bottles being conveyed on a transport line are halted, usually in sets, at a filling station where the bottles are weighed by resting them on a scale; however, this station is in known devices of complex construction because to effect the weighing out of the individual bottles, the same must be isolated from contact with the members which have spaced them apart in order to make them available for filling by the introduction of mechanisms which bring about in fact excessive complications.

From US—A—3 776 324 is known an automatic loader having means for automatically weighing the material delivered. However the weighing precision of this known device is very low since the shutting of the delivery container is automatically actuated by a spring when reaching a determined weight.

It is the aim of this invention to provide a bottle filling device wherein the operation can be carried out with the bottles packed in boxes with determination of the weight of the liquid introduced into each bottle, ensuring large productions with structures which impose a reasonable investment and involve no excessive bulk.

Within the proposed aim it is an object of the invention to provide a filling device which allows the realization of in-line plants with a particularly simplified construction.

The proposed aim and the outlined objects are achieved by a bottle filling device, according to the invention, comprising at least one filling station as defined in Claim 1.

Further features and advantages will be apparent from the following description of two preferred but not exclusive embodiments of the invention, as shown by way of illustration and not of limitation in the accompanying drawings, where:

Figure 1 is a part-sectional side view of a carousel device employed to fill bottles packed in boxes;

Figure 2 is a section on the plane II—II of Figure 1;

Figure 3 is an enlarged scale view of a detail relating to one of the tanks in Figure 1;

Figure 4 is a fragmentary perspective view of an in-line device.

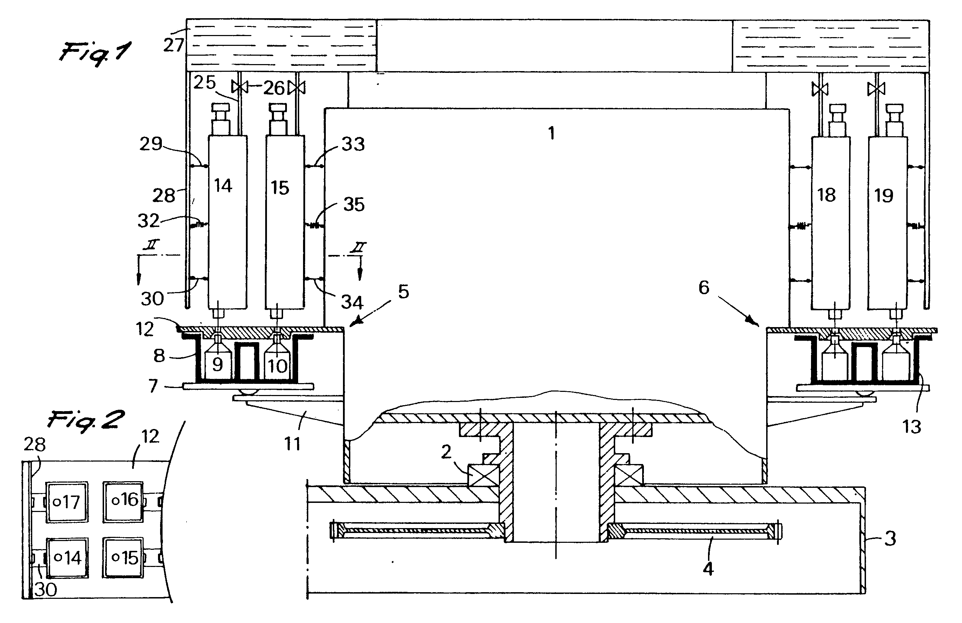

With reference to Figures 1, 2 and 3, indicated at 1 is the carousel main frame, supported with the interposition of the bearing 2 on the bed 3 and driven rotatively in a known manner through the sprocket wheel 4, which has at its periphery a plurality of stations such as those indicated at 5 and 6. Each of these stations are loaded by known means with a box containing bottles to be filled; thus, the station 5 comprises a plate 7 supporting the box 8 containing four bottles of which the visible two are indicated at 9 and 10, and an arm 11 which operates in a manner known per se to take the plate 7 with the box 8, from an underlying position, to the position shown in Figure 1, with the necks of the bottles inserted into the flaring holes of the centering plate 12 rigid with the main frame 1.

All the other stations, and among these the station indicated at 6 which carries the box 13 of bottles, are configured to an identical design. Each box is held in the station to which it has been loaded while rotation angle of the carousel is completed within such a time period as to allow for complete filling of the bottles with the liquid supplied from the tanks to be described hereinafter. Thereafter the box is unloaded by known means and delivered to storage.

At a position overlying each of the bottles contained in one of the boxes positioned on the stations described a tank is provided which is adapted to feed with liquid, by gravity through a cock, the corresponding bottle. The four tanks overlying the four bottles in the box 8 are indicated at 14, 15, 16, 17, of which in particular the ones indicated at 14 and 15 overlie the visible bottles 9 and 10, and indicated at 18 and 19 are two tanks out of the four which overlie the four bottles in the box 13.

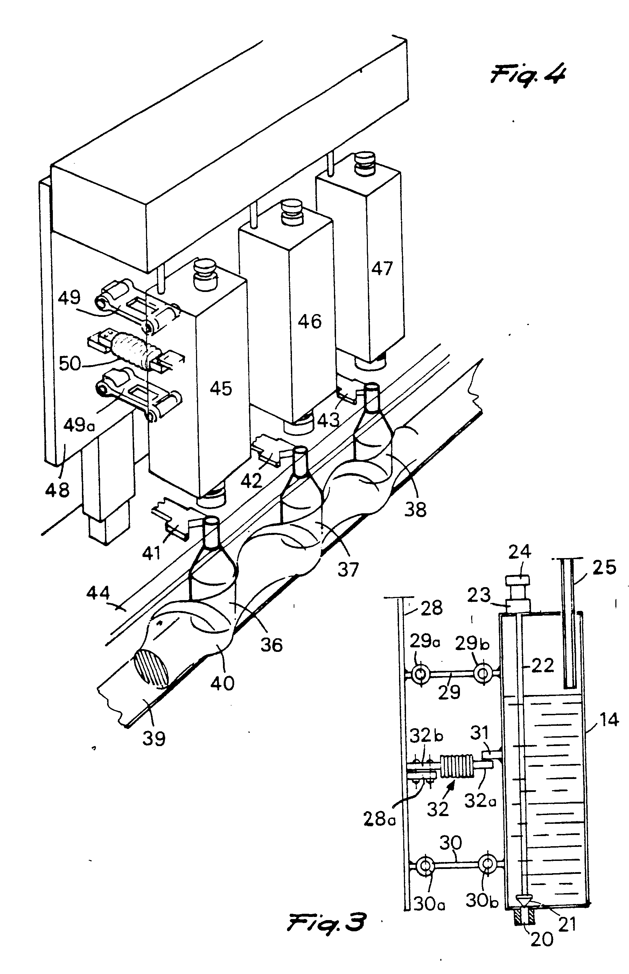

All these tanks are identical, and accordingly, the one indicated at 14 will be described in detail with reference to Figure 3.

Said tank 14 comprises, therefore, the cock for feeding with liquid the underlying bottle, formed of a passageway 20 with a shutter 21 at the lower end of a rod 22 driven upwards by an electromagnet 23 upon consent from the automatic control system of the device to start the filling step, and downwards by its own weight and by the weight of a block 24 rigid therewith to cut off the outflow of liquid in conformity with what will be specified hereinafter.

The tank 14 contains an amount of liquid capable of producing a right value of outflow velocity from the cock, and topping up of the liquid in the tank in substantially equal amounts to the exiting amount for filling a bottle is effected, during the time intervals when the passageway 20 is closed, througipassageway 20 is closed, through a conduit 25 controlled by a valve 26 which branches out from a main tank 27 supported on the carousel structure. The tank herein is connected kinematically to a rigid wall 28 which forms a part of the peripheral frame of the carousel, through means adapted to allow for it a translatory movement in the vertical direction, albeit composited with a quite negligible horizontal component. In the embodiment, this means comprises rocker arms 29 and 30 journalled at 29a and 30a to said wall and at 29b and 30b to the tank, and said tank is provided with a shelf 31 which rests upon a lug 32a of an instrument known per se generally indicated at 32, which is attached with another lug 32b thereof to the shelf 28a rigid with the wall 28.

The instrument 32, which may be for example of the type called "load cell" identified with the symbol 26-4 manufactured by Firma Hottinger Baldwin Messtechnik GmbH, is adapted to send an electric signal proportional to the deflection of the lug 32a caused by the weight of the tank 14 bearing on it to a control unit for the electromagnet 23 which determines the closure of the shutter upon the weight of the liquid which has come out of the tank to pass by gravity into the underlying bottle reaching the preset value.

As mentioned, all the tanks are identical, and so for example the tank 15 is connected kinematically to the main frame 1 of the carousel through analogous rocker arms 33 and 34, and bears on one lug of an instrument 35 attached with the other lug to said frame 1.

Thus, it has been shown how by adopting the device of this invention, wherein the amount of liquid which will be contained in each bottle is determined weightwise in a tank which overlies the bottle and without affecting the bottle itself, it becomes possible to effect filling of the bottles in the boxes containing them positioned on the stations of a carousel. This solution as explained offers great advantages both in comparison with systems which provide for extraction of the bottles from the boxes to effect the weighing of the individual bottles, with considerable speeding up of the operation and elimination of the machines which are to effect the extraction of the bottles from the boxes and reintroduction of the same after filling, and in comparison with the systems which effect the filling in boxes in-line, with increased production rate and elimination of equipment, and apart the advantages obtained by using the metering-by-weight technique instead of the metering-by-volume one, as already explained.

Furthermore, the invention also enables the realization of devices for in-line filling with a particularly simplified construction; an example therefor is the device shown in Figure 4 suitable for small and medium production rates. In this embodiment at 36, 37, 38 are indicated three bottles supported on a conveyor belt 39, at a standstill in contact with a spacer member consisting of an auger 40 and ready to be definitively centered by the advancement of detents 41, 42, 43 which contact the bottle necks urging them against a stationary rod 44.

At a position overlying each of the three bottles there are present tanks 45, 46, 47 of the type described in the foregoing with reference to Figure 3, all connected kinematically to a fixed wall 48 of the frame of the device by means of rocker arms such as 49 and 49a for the tank 45, and operating in combination with instruments such as 50 for said tank 45.

As may be appreciated, the construction of this in-line device is particularly simple because, thanks to the fact that the weighing out of the liquid to be delivered to each individual bottle is effected above and independently of the bottle itself, it allows holding the bottles in contact with the transport, spacer and centering members, without the need for solving the problems of bottle isolation while weighing out, which impose a considerable constructional complication on the known machines.

It should be noted, finally, that the device according to this invention finds advantageous application also to carousel fillers with stations adapted to receive a single bottle; in the known types, in fact, the weighing out of each individual bottle is carried out by an instrument, which may be for example of the load-cell type mentioned above, connected to the plate with which each station is equipped for supporting the bottles, and this arrangement may originate problems such as breakage of the instrument on the occurrence of a malfunction in the bottle handling by the members for loading and unloading the same onto/from the plates; in the device according to the invention, by contrast, the instruments are totally isolated from the bottles, and are arranged to operate in ideal conditions which are unaffected by the manipulations to which said bottles are subjected, and therefore solving the above drawbacks.

The invention herein is susceptible to many modifications and changes, all falling within the scope of the inventive concept; thus, as an example, the tank overlying each bottle could be connected kinematically to the device frame, it being attached to the lugs of two load cells attached with the other lugs to said frame.

## Claims

1. A bottle filling device, comprising at least one filling station (5, 6) for receiving a bottle (9, 10; 36—38) to be filled, characterized in that said at least one filling station (5, 6) comprises an own tank (14—17; 45—47) for feeding a correspondent bottle with liquid and/or granolous material by gravity through a cock (20—23) and means (32, 50) associated with each said tank for determining the weight of the liquid and/or granolous material which has been delivered at any instant from the tank and generating a shutting off signal for interrupting the delivery upon the delivered weight of liquid and/or granolous material reaching a preset value.

2. A device according to Claim 1, characterized in that said weight determining means (32, 50) determines the weight of the liquid and/or granolous material which has been delivered to an underlying bottle (9, 10; 36—38) and generates a shutting off signal for said cock (20—30) upon the liquid and/or material falling in said underlying bottle reaching said preset weight.

3. A device according to claims 1 and 2, characterized in that said tank (14—17; 45—47) is provided with a topping liquid inlet conduit (25) which branches out from a main tank and is controlled by a valve (26) openable by an automatic control signal when said cock (20—23) is shut off.

4. A device according to claims 1—3, characterized in that each said tank (14—17; 45—47) is connected kinematically to a device frame (28—48) through means (29, 49) for allowing the translation of each tank in the vertical direction, and is provided with a support shelf (31) on a first lug (32a) of said weight determining means made rigid at a second lug thereof (32b) with said frame, thereby to send an electric signal to a control unit for the cock of the tank to effect the closure of the same, said electric signal being proportional to the deflection of said first lug in contact with said shelf.

5. A device according to one or more of the preceding claims, characterized in that the means connecting each tank (14—17; 45—47) to the device frame comprise two rocker arms (29, 30; 49, 49a) provided at the ends with swivels (29a, 30a) with substantially horizontal axes connected respectively to said tank and to said frame (28; 48).

6. A device according to claims 1—3, characterized in that each tank is connected kinematically to a device frame, and said weight determining means comprises two lugs, one said lug being attached to one said tank and the other lug being rigid with said frame, said weight determining means sending an electric signal to a control unit for the tank cock to cause the same to close, said electric signal being proportional to the deflection of the lug in contact with the tank.

7. A device according to one or more of the preceding claims, characterized in that each tank (14—17; 45—47) has such a capacity as to contain an amount of liquid capable of exerting on the wall whence the cock (20) branches out a hydrostatic pressure adapted to determine the desired liquid outflow velocity.

## Patentansprüche

1. Flaschenabfüllvorrichtung mit wenigstens einer Füllstation (5, 6) für die Aufnahme der zu füllenden Flaschen (9, 10; 36—38), dadurch gekennzeichnet, daß die wenigstens eine Füllstation (5, 6) einen eigenen Tank (14—17; 45—47) für die Beschickung einer entsprechenden Flasche mit flüssigem und/oder körnigem Material mittels Schwerkraft durch einen Hahn (20—23) und eine Einrichtung (32, 50) aufweist, welche jedem der Tanks zugeordnet ist, um das Gewicht des flüssigen und/oder körnigen Materials, welches zu jedem Zeitpunkt aus dem Tank abgegeben wurde, zu bestimmen und ein Absperrsignal zu erzeugen, um die Abgabe zu unterbrechen, sobald das abgegebene Gewicht an flüssigem und/oder körnigem Material einen vorbestimmten Wert erreicht.

2. Vorrichtung nach Anspruch 1, dadurch gekennzeichnet, daß die genannte Einrichtung zur Gewichtsbestimmung (32, 50) das Gewicht des an eine darunterstehende Flasche (9, 10; 36—38) abgegebenen flüssigen und/oder körnigen Materials ermittelt und ein Absperrsignal für den Hahn (20—30) erzeugt, sobald das in die darunterliegende Flasche fallende flüssige und/oder körnige Material das vorbestimmte Gewicht erreicht.

3. Vorrichtung nach den Ansprüchen 1 und 2, dadurch gekennzeichnet, daß der Tank (14—17; 45—47) mit·einem Aufsatzrohr (25) für den Flüssigkeitseinlaß versehen ist, das von einem Haupttank aus wegführt und von einem Ventil (26) gesteuert wird, das durch ein automatisches Steuerungssignal geöffnet werden kann, wenn der Hahn (20—23) gesperrt wird.

4. Vorrichtung nach den Ansprüchen 1—3, dadurch gekennzeichnet, daß jeder Tank (14—17; 45—47) kinematisch mit einem Vorrichtungsrahmen (28—48) mittels Einrichtungen (29, 49) zwecks Ermöglichung einer Translation eines jeden Tanks in vertikaler Richtung verbunden und mit einer Stützkonsole (31) -auf einem ersten Ansatz (32a) der Einrichtung zur Gewichtsbestimmung versehen ist, welche mit einem zweiten Ansatz (32b) mit dem Rahmen fest verbunden ist, wobei ein elektrisches Signal an eine Steuerungseinheit für den Tankhahn ausgesendet wird, um die Schließung desselben zu bewirken, wobei das genannte elektrische Signal proportional zur Abbiegung des mit dem Rahmen in Berührung stehenden ersten Ansatzes ist.

5. Vorrichtung nach einem oder mehreren der vorhergehenden Ansprüche, dadurch gekennzeichnet, daß die Einrichtungen, welche jeden Tank (14—17; 45—47) mit dem Vorrichtungsrahmen verbinden, zwei Schwingen (29, 30; 49, 49a) aufweisen, die an den Enden mit Drehgelenken (29a, 30a) mit im wesentlichen horizontalen Achsen versehen sind, welche mit dem Tank bzw. mit dem Rahmen (28; 48) verbunden sind.

6. Vorrichtung nach den Ansprüchen 1—3, dadurch gekennzeichnet, daß jeder Tank kinematisch mit einem Vorrichtungsrahmen verbunden ist und die Einrichtung zur Gewichtsbestimmung zwei Ansätze aufweist, von denen einer an einen der Tanks angeschlossen und der andere starr mit dem Rahmen verbunden ist, wobei die Einrichtung zur Gewichtsbestimmung ein elektrisches Signal an eine Steuerungseinheit für den Tankhahn aussendet, um dessen Schließung herbeizuführen, welches elektrische Signal proportional zur Abbiegung des mit dem Tank in Verbindung stehenden Ansatzes ist.

7. Vorrichtung nach einem oder mehreren der vorhergehenden Ansprüche, dadurch gekennzeichnet, daß jeder Tank (14—17; 45—47) ein solches Fassungsvermögen hat, daß er eine Flüssigkeitsmenge aufnehmen kann, die befähigt ist, auf die Wand, von welcher der Hahn (20) wegsteht, einen hydrostatischen Druck auszuüben, durch welchen die gewünschte Ausströmgeschwindigkeit der Flüssigkeit bestimmt wird.

**Revendications**

1. Dispositif de remplissage de bouteilles, comprenant au moins un poste de remplissage (5, 6) pour recevoir une bouteille (9, 10; 36—38) à remplir, caractérisé en ce que le ou lesdits postes de remplissage (5, 6) comprennent leur propre réservoir (14—17; 45—47) pour remplir par gravité une bouteille correspondante de liquide et/ou d'un produit granuleux en passant par un robinet (20—23), et des moyens (32, 50) associés à chaque réservoir pour déterminer le poids du liquide et/ou du produit granuleux qui a été alimenté à un moment quelconque par le réservoir et produire un signal de fermeture pour interrompre l'alimentation quand le poids de liquide et/ou de produit granuleux alimenté a atteint une valeur prédéterminée.

2. Dispositif selon la revendication 1, caractérisé en ce que lesdits moyens de détermination de poids (32, 50) déterminent le poids du liquide ou du produit granuleux qui a été envoyé dans une bouteille sous-jacente (9, 10; 36—38) et produit un signal de fermeture dudit robinet (20—30) quand ledit liquide et/ou produit tombant dans ladite bouteille sous-jacente a atteint ledit poids prédéterminé.

3. Dispositif selon les revendications 1 et 2, caractérisé en ce que ledit réservoir (14—17; 45—47) est muni d'une conduite d'entrée de liquide (25) située à sa partie supérieure, qui part d'un réservoir principal et est commandée par une soupape (26) pouvant être ouverte par un signal de commande automatique quand ledit robinet (20—23) est fermé.

4. Dispositif selon les revendications 1 à 3, caractérisé en ce que chacun desdits réservoirs (14—17; 45—47) est relié cinématiquement à un châssis (28—48) du dispositif par des moyens (29, 49) permettant un mouvement de translation de chaque réservoir dans la direction verticale, et est muni d'une console de support (31) s'appuyant sur une première patte (32a) desdits moyens de détermination de poids qui sont rendus solidaires dudit châssis par une seconde patte (32b), de manière à envoyer un signal électrique à une unité de commande du robinet du réservoir pour en déterminer la fermeture, ledit signal électrique étant proportionnel au fléchissement de ladite première patte qui est en contact avec ladite console.

5. Dispositif selon une ou plusieurs des revendications précédentes, caractérisé en ce que les moyens reliant chaque réservoir (14—17; 45—47) au châssis du dispositif comprennent deux bras basculants (29, 30; 49, 49a) munis à leurs extrémités de pivots (29a, 30a) à axes sensiblement horizontaux reliés respectivement audit réservoir et audit châssis (28; 48).

6. Dispositif selon les revendications 1 à 3, caractérisé en ce que chaque réservoir est relié cinématiquement à un châssis du dispositif, et lesdits moyens de détermination de poids comprennent deux pattes, l'une des pattes étant fixée audit réservoir et l'autre patte étant solidaire dudit châssis, lesdits moyens de détermination de poids appliquant un signal électrique à une unité de commande du robinet du réservoir pour l'amener à se fermer, ledit signal électrique étant proportionnel au fléchissement de la patte qui est en contact avec le réservoir.

7. Dispositif selon une ou plusieurs des revendications précédentes, caractérisé en ce que chaque réservoir (14—17; 45—47) a une capacité telle qu'il contient une quantité de liquide capable d'exercer sur la paroi d'où fait saillie le robinet (20) une pression hydrostatique apte à déterminer la vitesse d'écoulement désirée pour le liquide.

Fig.1

Fig.2

EP 0 200 969 B1

Fig. 4

Fig. 3

2